# EUROPÄISCHE PATENTSCHRIFT

(11) **EP 3 489 460 B1**
(45) Veröffentlichungstag und Bekanntmachung des Hinweises auf die Patenterteilung: **06.01.2021**
(21) Anmeldenummer: 18206238.0
(22) Anmeldetag: 14.11.2018
(51) Int. Cl.: F01D 3/04, F01D 17/04, F01D 17/10, F16K 39/02

(54) **VENTIL FÜR EINE DAMPFTURBINE**
VALVE FOR A STEAM TURBINE
SOUPAPE POUR UNE TURBINE À VAPEUR

(30) Priorität: 27.11.2017 DE 102017221205
(43) Veröffentlichungstag der Anmeldung: 29.05.2019
(73) Patentinhaber: Siemens Aktiengesellschaft, 80333 München (DE)
(72) Erfinder: Backasch, Rüdiger, 02826 Görlitz (DE); Preibisch, Stefan, 02828 Görlitz (DE); Weltersbach, Dirk, 44805 Bochum (DE)

(56) Entgegenhaltungen:
- DE-A1- 2 113 602
- DE-C- 517 648
- US-A- 1 867 004
- US-A- 2 821 927

## Beschreibung

### Technisches Gebiet

Die vorliegende Erfindung betrifft ein Ventil, insbesondere Regelventil, für eine Dampfturbine, sowie eine Turbine, insbesondere eine Dampfturbine.

### Hintergrund der Erfindung

In heutigen Dampfturbinen sind Stellkräfte für Regelventile von Dampfturbinen nahe der geschlossenen Stellung bzw. im Moment des Öffnens sehr hoch. Dies führt zu hohen Anforderungen an die Ventilantriebe und alle damit in Zusammenhang stehenden Teile, wie beispielsweise Kupplungen, Ventilschäfte und/oder Halterungen für die Ventilantriebe. In aktuellen Dampfturbinen sind Zweisitzventile weit verbreitete Ventillösungen insbesondere bei Industrieturbinen. Durch den Druckausgleich, der durch die beiden über einen Schaft miteinander verbundenen Ventilteller gleicher Baugröße sichergestellt wird, sind nur kleine Antriebskräfte erforderlich, so dass die zuvor beschriebene technische Problemstellung weitestgehend entfällt.

Ein gängiges Problem dieser Ventilbauform sind jedoch Undichtigkeiten, die dazu führen, dass bei geschlossenem Ventil abhängig von den Temperaturbedingungen eine nennenswerte Sitzleckage auftritt. Ursache hierfür ist die ungleiche Wärmeausdehnung des Gehäuses mit den beiden Ventilsitzen auf der einen Seite und des axial verschiebbaren Ventilschafts mit den Ventiltellern auf der anderen Seite. Durch eine entsprechende Auswahl des Materials von Gehäuse und Ventilschaft können zwar abgestimmte Wärmeausdehnungskoeffizienten realisiert werden, jedoch kann eine Optimierung nicht alle Betriebszustände, insbesondere kalt und angewärmt vor dem Öffnen bzw. nach dem Schließen, aus dem Lastbetrieb abdecken. So werden zum Beispiel beide Bauteile auf unterschiedliche Temperaturen erwärmt, wenn das Ventil geschlossen ist aber Frischdampf anliegt. Während das Gehäuse und die Ventilsitze durch Frischdampf durchwärmt werden, bleibt der Ventilschaft zwischen den beiden Ventiltellern kälter. Um eine weitgehend leckagefreie Konstruktion unter verschiedenen Betriebs- und Durchwärmungszuständen zu erreichen, ist eine neue Lösung notwendig.

Darüber hinaus ist es bei Zweisitzventilen bekannt, dass im offenen Zustand Strömungsfluktuationen durch die beiden aufeinander treffenden Teilströme des eintretenden Dampfes durch die zwei getrennten Ventilsitze auftreten können. Bei einem Zweisitzventil öffnet jeder der beiden Ventilteller jeweils einen Ventilsitz, der abhängig vom Hub und dem Differenzdruck durchströmt wird. Somit ist die Funktion Druckausgleich mit der Funktion Ventilsitz gekoppelt.

Die DE 21 13 602 A1 offenbart ein Ventil für eine Dampfturbine, aufweisend eine Gehäuseanordnung mit einem Einlass und einem ersten Auslass, ein erstes Ventilelement, und ein erstes Ausgleichselement, wobei das erste Ventilelement derart in der Gehäuseanordnung zwischen dem Einlass und dem ersten Auslass angeordnet ist, dass durch das erste Ventilelement ein Fluidfluss zwischen dem Einlass und dem ersten Auslass steuerbar ist. Das Ventil weist weiterein erstes Volumen zwischen dem Einlass und dem ersten Ventilelement auf, wobei das erste Ventilelement das erste Volumen von einem zweiten Volumen an dem ersten Auslass trennt. Das erste Ausgleichselement ist dabei derart in der Gehäuseanordnung angeordnet, dass mittels zumindest einer Dichtung zwischen der Gehäuseanordnung und dem ersten Ausgleichselement das erste Volumen gegen das zweite Volumen abgedichtet ist. Dabei ist das erste Ausgleichselement und das erste Ventilelement über einen Ventilschaft starr miteinander verbunden, wobei das erste Ausgleichselement und das erste Ventilelement derart beweglich angeordnet sind, dass bei einem Verfahren des ersten Ventilelements und des ersten Ausgleichselements das erste Volumen und das zweite Volumen über das erste Ausgleichselement hinweg gegeneinander abgedichtet bleiben. Ähnliche Ventile sind auch in der US 1 867 004 A und der DE 517 648 C offenbart.

### Darstellung der Erfindung

Es ist eine Aufgabe der vorliegenden Erfindung, ein Ventil für eine Dampfturbine mit reduzierten Leckageverlusten über den Ventilsitz und mit geringen Stellkräften bereitzustellen.

Diese Aufgabe wird mit einem Ventil, insbesondere einem Regelventil, für eine Dampfturbine, einer Turbine, insbesondere einer Dampfturbine, gelöst.

Gemäß einem ersten Aspekt der vorliegenden Erfindung wird ein Ventil, insbesondere Regelventil, für eine Dampfturbine, offenbart. Das Ventil weist eine Gehäuseanordnung mit einem Einlass und einem ersten Auslass, ein erstes Ventilelement und ein erstes Ausgleichselement auf. Das erste Ventilelement ist derart in der Gehäuseanordnung zwischen dem Einlass und dem ersten Auslass angeordnet, dass durch das erste Ventilelement ein Fluidfluss zwischen dem Einlass und dem ersten Auslass steuerbar ist. Ein erstes Volumen ist zwischen dem Einlass und dem ersten Ventilelement definiert. Das erste Ventilelement trennt das erste Volumen von einem zweiten Volumen an dem ersten Auslass. Das erste Ausgleichselement ist derart in der Gehäuseanordnung angeordnet, dass mittels zumindest einer Dichtung, insbesondere zumindest eines Kolbenrings, zwischen der Gehäuseanordnung und dem ersten Ausgleichselement das erste Volumen gegen das zweite Volumen abgedichtet ist. Ferner sind das erste Ausgleichselement und das erste Ventilelement über einen Ventilschaft starr miteinander verbunden. Das erste Ausgleichselement und das erste Ventilelement sind derart beweglich angeordnet, dass bei einem Verfahren des ersten Ventilelements und des ersten Ausgleichselements das erste Volumen und das zweite Volumen über das erste Ausgleichselement hinweg gegeneinander abgedichtet bleiben.

Das Ventilelement weist insbesondere einen Ventilkegel bzw. Ventilteller auf, welcher auf einem Ventilschaft angeordnet ist. Das Ventilelement kann den Fluidfluss zwischen dem Einlass und dem ersten Auslass entweder unterbinden oder ermöglichen. Ist der Fluidfluss einerseits ermöglicht, fließt ein Fluid vom Einlass über das erste Ventilelement zum ersten Auslass. Ist der Fluidfluss andererseits unterbunden, fließt kein Fluid über das erste Ventilelement von dem Einlass zu dem ersten Auslass.

Das erste Volumen ist ein Teilbereich des gesamten inneren Volumens der Gehäuseanordnung und ist mittels des ersten Ventilelements von dem zweiten Volumen am ersten Auslass getrennt. Das zweite Volumen umfasst denjenigen Rest des inneren Volumens der Gehäuseanordnung, welcher nicht durch den Teilbereich des ersten Volumens umfasst ist.

Das zweite Volumen und der erste Auslass sind strömungstechnisch miteinander verbunden. Ferner sind das erste Volumen und der Einlass strömungstechnisch miteinander verbunden. Das erste Ventilelement trennt das erste Volumen von dem zweiten Volumen derart, dass mittels des ersten Ventilelements ein Fluid zwischen dem ersten Volumen und dem zweiten Volumen strömen kann.

Das erste Ausgleichselement ist zwischen dem ersten Volumen und dem zweiten Volumen angeordnet. Somit liegt an der einen Seite des ersten Ausgleichselements der erste Druck des ersten Volumens und an der anderen Seite des ersten Ausgleichselements der zweite Druck des zweiten Volumens an.

Die zumindest eine Dichtung ist insbesondere als Kolbenring ausgebildet, welcher eine Dichtung zwischen dem Ausgleichselement und der Gehäuseanordnung auch bei unterschiedlichen Wärmeausdehnungen zwischen Gehäuseanordnung und ersten Ausgleichselement sicherstellt.

Das erste Ventilelement und das erste Ausgleichselement sind über den Ventilschaft starr miteinander verbunden, d.h. ein relativer Abstand zwischen dem ersten Ventilelement und dem ersten Ausgleichselement verändert sich zu keiner Zeit.

Bei einem Verfahren des ersten Ventilelements und des ersten Ausgleichselements werden über ein Ansteuern des Ventilschafts das erste Ventilelement und das erste Ausgleichselement synchron um dieselbe Strecke entlang einer Richtung verschoben, welche sich parallel zu dem Ventilschaft erstreckt.

Bei dem Verfahren des ersten Ventilelements und des ersten Ausgleichselements bleiben das erste Volumen und das zweite Volumen über das erste Ausgleichselement hinweg gegeneinander abgedichtet bedeutet erfindungsgemäß insbesondere, dass zu keinem Zeitpunkt Fluid über das erste Ausgleichselement hinweg von dem ersten Volumen in das zweite Volumen fließen kann, sowie vice versa. Ist einerseits das erste Ventilelement geschlossen, sind das erste Volumen und das zweite Volumen vollständig gegeneinander abgedichtet und keinerlei Fluid fließt vom ersten Volumen in das zweite Volumen. Ist andererseits das erste Ventilelement geöffnet, fließt Fluid lediglich über das erste Ventilelement von dem ersten Volumen in das zweite Volumen. Gleichzeitig fließt jedoch kein Fluid über das erste Ausgleichselement von dem ersten Volumen in das zweite Volumen. Beispielsweise können sich das erste Ventilelement und das erste Ausgleichselement derart gegenüberliegen, dass eine Volumenvergrößerung an dem ersten Ventilelement durch eine Volumenverringerung an dem ersten Ausgleichselement ausgeglichen wird, sowie vice versa.

Mit einem derartigen Ventil für eine Dampfturbine kann ein Kraftausgleich über die jeweils druckbeaufschlagte Fläche des ersten Ventilelements und des ersten Ausgleichselements erfolgen. Insbesondere dadurch, dass das erste Ventilelement und das erste Ausgleichselement über den Ventilschaft starr miteinander verbunden sind, so dass sich der relative Abstand zwischen dem ersten Ausgleichselement und dem ersten Ventilelement nicht ändert. Somit werden geringere Stellkräfte zum Öffnen bzw. Schließens des Ventilelements notwendig.

Ferner können Leckageverluste reduziert werden. Insbesondere, da mittels der Dichtung auf dem ersten Ausgleichselement sichergestellt ist, dass bei einer Verschiebung des Ausgleichselements durch Wärmedehnung relativ zu der Gehäuseanordnung keine Leckagen zwischen dem ersten Ausgleichselement und der Gehäuseanordnung auftreten. Somit kann ein Anlaufen sowie Trudeln des Turbinenrotors durch mögliche Dampfleckagen verringert werden. Darüber hinaus können Strömungsfluktuationen, welche beispielsweise in Zweisitzventilen aufgrund der Vermischung von zwei getrennten Fluidströmen auftreten, unterbunden werden.

Die Erfindung sieht weiter vor, dass die Gehäuseanordnung ein erstes Innengehäuse und ein Außengehäuse aufweist, wobei das erste Innengehäuse derart in der Gehäuseanordnung anordenbar ist, dass das erste Innengehäuse das erste Volumen und das zweite Volumen voneinander trennt, und wobei das erste Innengehäuse eine erste Öffnung aufweist. Ferner ist das erste Ventilelement in der ersten Öffnung anordenbar, wobei die Gehäuseanordnung eine zweite Öffnung aufweist, in welcher das erste Ausgleichselement angeordnet ist.

Das Außengehäuse bildet das Ventilgehäuse und somit die äußere Wand zwischen Ventil und Umgebung. Das erste Innengehäuse ist in dem Außengehäuse angeordnet, wobei das erste Innengehäuse das gesamte innere Volumen des Außengehäuses in zwei unterschiedliche voneinander getrennte Volumina trennt. Insbesondere unterteilt das erste Innengehäuse das gesamte innere Volumen in das erste Volumen und das zweite Volumen.

Die erste Öffnung ist derart ausgestaltet, dass das erste Ventilelement, insbesondere der Ventilteller oder der Ventilkegel, darin gegen den Ventilsitz abdichtet. Der Ventilsitz ist dabei in der ersten Öffnung in dem ersten Innengehäuse angeordnet. Insbesondere ist der Ventilsitz zwar fest mit dem ersten Innengehäuse verbunden, jedoch auswechselbar, so dass bei einem etwaigen Verschleiß des Ventilsitzes dieser problemlos und mit geringem Aufwand ausgewechselt werden kann.

Der Ventilschaft ist z.B. eine Achse, auf welcher das erste Ventilelement und das erste Ausgleichselement angeordnet sind. Der Ventilschaft ist außerdem in dem Außengehäuse gelagert. Über den Ventilschaft erfolgt auch die gemeinsame Ansteuerung des ersten Ausgleichselements und des ersten Ventilelements.

Beim Gegenstand der vorliegenden Erfindung weist das erste Innengehäuse die zweite Öffnung auf.

Die zweite Öffnung ist in dem ersten Innengehäuse derart ausgebildet, dass die erste Öffnung und die zweite Öffnung fluchtend zueinander angeordnet sind, derart dass das erste Ventilelement und das erste Ausgleichselement, welche gemeinsam auf einem sich gerade erstreckenden Ventilschaft angeordnet sind, in der ersten Öffnung bzw. der zweiten Öffnung angeordnet sind.

Somit sind die erste Öffnung und die zweite Öffnung beide in dem ersten Innengehäuse angeordnet. In der ersten Öffnung ist das erste Ventilelement und in der zweiten Öffnung das erste Ausgleichselement angeordnet. Somit sind insbesondere das erste Ausgleichselement und das erste Ventilelement in zwei einander gegenüberliegenden Wänden des ersten Innengehäuses angeordnet. Der Ventilschaft mag ferner in dem Außengehäuse gelagert sein.

In dieser beispielhaften Ausführungsform ist das erste Volumen zwischen dem Außengehäuse und dem ersten Innengehäuse angeordnet, wobei das Außengehäuse ferner den Einlass aufweist.

Das zweite Volumen ist zwischen dem ersten Innengehäuse und dem ersten Auslass angeordnet.

Ist das Ventil geschlossen, strömt kein Fluid von dem ersten Volumen in das zweite Volumen und der erste Druck in dem ersten Volumen ist größer als der zweite Druck in dem zweiten Volumen.

Beim Gegenstand der vorliegenden Erfindung weist die Gehäuseanordnung ferner ein zweites Innengehäuse auf, wobei das zweite Innengehäuse derart in der Gehäuseanordnung anordenbar ist, dass das zweite Innengehäuse das erste Volumen und ein viertes Volumen an einem zweiten Auslass trennt. Ferner weist das Ventil ein zweites Ventilelement und ein zweites Ausgleichselement auf. Das zweite Innengehäuse weist eine dritte Öffnung und eine vierte Öffnung auf, wobei das zweite Ventilelement in der dritten Öffnung anordenbar ist und das zweite Ausgleichselement in der vierten Öffnung anordenbar ist. Ferner sind das zweite Ausgleichselement und das zweite Ventilelement über einen weiteren Ventilschaft starr miteinander verbunden, wobei der Ventilschaft und der weitere Ventilschaft gegeneinander beweglich gekoppelt sind.

Das erste Innengehäuse und das zweite Innengehäuse sind beabstandet zueinander in dem Außengehäuse angeordnet, wobei das erste Innengehäuse das zweite Volumen an dem ersten Auslass und das zweite Innengehäuse das vierte Volumen an dem zweiten Auslass jeweils von dem ersten Volumen trennt. Der Abstand zwischen dem ersten Innengehäuse und dem zweiten Innengehäuse ist auf den Abstand zwischen zwei Punkten an denen das Fluid in den Strömungskanal der Turbine einströmen soll, angepasst.

Das zweite Innengehäuse weist die dritte Öffnung, in welcher das zweite Ventilelement angeordnet ist, und die vierte Öffnung, in welcher das zweite Ausgleichselement angeordnet ist, auf. Insbesondere sind das erste Innengehäuse und das zweite Innengehäuse identisch aufgebaut. Ferner ist auch das erste Ventilelement und das zweite Ventilelement identisch sowie das erste Ausgleichselement und das zweite Ausgleichselement identisch. Somit liegt beispielsweise dieselbe Druckdifferenz an dem ersten Ventilelement und dem zweiten Ventilelement an. Ferner kann an zwei verschiedenen Stellen des Strömungskanals der Turbine Fluid eingeströmt werden.

Mit einer derartigen Anordnung sind das erste Ausgleichselement und das erste Ventilelement fluchtend zueinander auf demselben sich gerade erstreckenden Ventilschaft starr und mit gleichbleibendem Abstand zueinander angeordnet. Ferner sind das zweite Ausgleichselement und das zweite Ventilelement fluchtend zueinander auf demselben sich gerade erstreckenden weiteren Ventilschaft starr und mit gleichbleibendem Abstand zueinander angeordnet. Der Ventilschaft und der weitere Ventilschaft sind ebenfalls fluchtend zueinander angeordnet und gegeneinander beweglich miteinander gekoppelt. Um den Ventilschaft und den weiteren Ventilschaft gegeneinander beweglich miteinander zu koppeln, ist an dem Ventilschaft ein Aktuator vorgesehen. Mittels des Aktuators können das erste Ventilelement und das zweite Ventilelement entweder gemeinsam oder voneinander entkoppelt geöffnet bzw. geschlossen werden.

Der Ventilschaft und der weitere Ventilschaft sind fluchtend zueinander angeordnet bedeutet erfindungsgemäß, dass der Ventilschaft und der weitere Ventilschaft zwar getrennte Bauteile sind jedoch auf einer gemeinsamen imaginären Achse angeordnet sind und sich entlang einer gemeinsamen Achse erstrecken.

Der weitere Ventilschaft und der Ventilschaft sind üblicherweise in einem Abstand x zueinander angeordnete, so dass zunächst beim Bewegen (Öffnen) des zweiten Ventiltellers auf dem weiteren Ventilschaft der erste Ventilteller bzw. der Ventilschaft sich nicht bewegen. Erst nach dem der Abstand x überwunden wird, wird auch der Ventilschaft mit dem ersten Ventilteller bewegt (geöffnet). Der Ventilschaft hat an seinem dem weiteren Ventilschaft zugewandten Ende eine Kontakt- bzw. Wirkfläche und der weitere Ventilschaft hat an seinem dem Ventilschaft zugewandten Ende eine entsprechende weitere Kontakt- bzw. Wirkfläche.

Gemäß einem weiteren Aspekt der vorliegenden Erfindung wird eine Turbine, insbesondere eine Dampfturbine, offenbart. Die Turbine weist einen Strömungskanal, einen Turbineneinlass und ein vorstehend beschriebenes Ventil auf.

Durch den Strömungskanal strömt das Arbeitsfluid, mit welchem die Turbine betrieben wird. Bevorzugt handelt es sich um eine mit Dampf als Arbeitsfluid betriebene Dampfturbine.

Die Turbine kann sowohl eine Radialturbine als auch eine Axialturbine sein.

Der Turbineneinlass ist diejenige Stelle in der Turbine, an welcher Arbeitsfluid in die Turbine und somit in den Strömungskanal einströmt. Die Turbine kann mehr als einen Turbineneinlass entlang des Strömungskanals aufweisen. Hierbei sind dann die verschiedenen Turbineneinlässe in Strömungsrichtung voneinander beabstandet angeordnet. Insbesondere kann so immer wieder auch zwischen verschiedenen Turbinenstufen Frischdampf in die Turbine zugeführt werden.

Ein Ausführungsbeispiel sieht vor, dass das zweite Volumen zwischen dem ersten Ventilelement und dem ersten Ausgleichselement angeordnet ist.

Ist das zweite Volumen zwischen dem ersten Ventilelement und dem ersten Ausgleichselement angeordnet, liegen sich das erste Ausgleichselement und das erste Ventilelement erfindungsgemäß gegenüber. Insbesondere sind das erste Ventilelement und das erste Ausgleichselement derart gegenüber angeordnet und starr miteinander verbunden, dass ein Verschieben des ersten Ventilelements immer ein korrespondierendes Verschieben des ersten Ausgleichselements bewirkt.

Ein Ausführungsbeispiel sieht vor, dass das erste Ventilelement und das erste Ausgleichselement in der Gehäuseanordnung gegenüberliegend angeordnet sind.

Sowohl das erste Ventilelement als auch das erste Ausgleichselement weisen zwei einander gegenüberliegende Hauptoberflächen auf.

Das erste Ventilelement und das erste Ausgleichselement sind gegenüberliegend angeordnet was erfindungsgemäß bedeutet, dass eine erste Hauptoberfläche des ersten Ventilelements und eine erste Hauptoberfläche des ersten Ausgleichselements sich gegenüberliegen. Ferner liegen eine zweite Hauptoberfläche des ersten Ventilelements und eine zweite Hauptoberfläche des ersten Ausgleichselements voneinander abgewandt.

Ein Ausführungsbeispiel sieht vor, dass eine erste Kraft durch einen ersten Druck eines Fluides in dem ersten Volumen auf eine erste Oberfläche des ersten Ventilelements wirkt, und dass eine zweite Kraft durch den ersten Druck in dem ersten Volumen auf eine erste Oberfläche des ersten Ausgleichselements wirkt, wobei die erste Oberfläche des ersten Ventilelements und die erste Oberfläche des ersten Ausgleichselements gleich groß sind, und wobei sich die erste Kraft und die zweite Kraft ausgleichen.

Insbesondere gleichen sich die erste Kraft und die zweite Kraft vollständig aus, wenn die erste Oberfläche des ersten Ventilelements und die erste Oberfläche des ersten Ausgleichselements, an welcher jeweils der erste Druck des Fluides in dem ersten Volumen anliegt, gleich groß sind.

Jedoch können gemäß einer weiteren beispielhaften Ausführungsform die erste Oberfläche des ersten Ausgleichselements und die erste Oberfläche des ersten Ventilelements eine Größendifferenz, insbesondere unterschiedliche Durchmesser, aufweisen. Ist diese Größendifferenz lediglich gering, stellt sich eine geringe Differenzkraft ein, so dass ein Antrieb des Ventils lediglich eine geringe Kraft aufbringen muss.

In einer beispielhaften Ausführungsform der vorliegenden Erfindung ist das erste Ventilelement zwischen einer geöffneten Stellung und einer geschlossenen Stellung bewegbar, wobei das erste Ventilelement in der geöffneten Stellung einen Fluidfluss zwischen dem Einlass und dem ersten Auslass ermöglicht und in der geschlossenen Stellung einen Fluidfluss zwischen dem Einlass und dem ersten Auslass unterbindet.

In der geöffneten Stellung kann Fluid zwischen dem Ventilsitz in der ersten Öffnung und dem Ventilteller bzw. dem Ventilkegel hindurch von dem ersten Volumen in das zweite Volumen strömen.

In der geschlossenen Stellung kann kein Fluid zwischen dem Ventilsitz in der ersten Öffnung und dem Ventilteller bzw. dem Ventilkegel hindurch von dem ersten Volumen in das zweite Volumen strömen, d.h. das erste Volumen und das zweite Volumen sind fluidtechnisch nicht miteinander verbunden.

Die zweite Öffnung ist in der Gehäuseanordnung derart ausgebildet, dass die erste Öffnung und die zweite Öffnung fluchtend zueinander angeordnet sind. Das erste Ventilelement ist in der ersten Öffnung angeordnet und das erste Ausgleichselement ist in der zweiten Öffnung angeordnet. Da ferner insbesondere das erste Ventilelement und das erste Ausgleichselement starr an dem Ventilschaft angeordnet sind, welcher sich gerade erstreckt, sind die erste Öffnung in dem ersten Innengehäuse und die zweite Öffnung in der Gehäuseanordnung fluchtend zueinander angeordnet.

In einer beispielhaften Ausführungsform der vorliegenden Erfindung weist das erste Ausgleichselement einen ersten Ausgleichskolben und eine erste Buchse auf, wobei der erste Ausgleichkolben in der ersten Buchse gleitend und mittels der zumindest einen Dichtung gegen die erste Buchse abgedichtet angeordnet ist, und wobei die erste Buchse in der zweiten Öffnung fluiddicht angeordnet ist.

Die erste Buchse ist in der zweiten Öffnung fluiddicht angeordnet bedeutet, dass die Begrenzungen der zweiten Öffnung mit der ersten Buchse fluiddicht verbunden sind, wobei die erste Buchse beispielhaft auswechselbar in der zweiten Öffnung angeordnet ist, so dass bei einem etwaigen Verschleiß der ersten Buchse diese problemlos und mit wenig Aufwand ausgewechselt werden kann.

Die äußere Form des ersten Ausgleichskolbens ist an die innere Kontur der ersten Buchse angepasst und mittels der zumindest einen Dichtung gegen die erste Buchse abgedichtet. Somit kann der erste Ausgleichskolben in der ersten Buchse gleiten. Die Anzahl der verwendeten Dichtungen hängt insbesondere von den in dem Ventil vorliegenden Randbedingungen, wie beispielsweise dem in ersten Volumen vorliegenden ersten Druck und dem in dem zweiten Volumen vorliegenden zweiten Druck, ab.

In einer beispielhaften Ausführungsform der vorliegenden Erfindung sind eine Länge der ersten Buchse und eine Länge des ersten Ausgleichskolbens derart aufeinander abgestimmt, dass bei einem maximalen Verfahren des ersten Ventilelements und des ersten Ausgleichskolbens der erste Ausgleichskolben zu jedem Zeitpunkt in der ersten Buchse gleitet.

Die Länge der ersten Buchse ist größer als die Länge des ersten Ausgleichskolbens. Die Länge der ersten Buchse und die Länge des ersten Ausgleichskolbens sind so aufeinander abgestimmt, dass bei einem maximalen Ventilhub der erste Ausgleichskolben immer in der ersten Buchse geführt wird.

Die Länge der ersten Buchse ist ebenfalls von einer maximalen Auslenkung des ersten Ausgleichskolbens und des ersten Ventilelements abhängig.

Die zumindest eine erste Dichtung, insbesondere der zumindest eine Kolbenring stellt die Dichtheit des ersten Ausgleichselements auch bei unterschiedlicher Wärmeausdehnung von Gehäuse und Ventilschaft bzw. Ausgleichskolben sicher, wobei gleichzeitig der Vorteil des Kraftausgleichs und niedriger Stellkräfte für den Antrieb bestehen bleibt. Auch wenn die zweite Kraft auf die erste Oberfläche des ersten Ausgleichselements und die erste Kraft auf die erste Oberfläche des ersten Ventilelements lediglich annähernd gleich groß sind, ist der Kraftausgleich nicht vollkommen und es sind trotzdem lediglich geringe Stellkräfte für den Antrieb notwendig.

In einem nicht erfindungsgemäßen Beispiel weist das Außengehäuse die zweite Öffnung auf. Ferner trennt das erste Ausgleichselement das erste Volumen von einem dritten Volumen, wobei das dritte Volumen zwischen dem Außengehäuse und dem ersten Ausgleichselement definiert ist. Das Ventil weist ferner eine Druckausgleichsverbindung auf, welche das dritte Volumen und das zweite Volumen miteinander verbindet.

Das Außengehäuse weist die zweite Öffnung derart auf, dass das erste Ausgleichselement zwischen zwei Teilabschnitten des Außengehäuses angeordnet ist, so dass das erste Ausgleichselement das dritte Volumen von dem ersten Volumen abtrennt. Somit ist dann zwischen dem Außengehäuse und dem ersten Innengehäuse das erste Volumen ausgebildet, welches mit dem Einlass verbunden ist. Ferner ist zwischen dem ersten Ausgleichselement und dem Außengehäuse das dritte Volumen ausgebildet und zwischen dem ersten Innengehäuse mit dem ersten Ventilelement und dem ersten Auslass das zweite Volumen ausgebildet.

Das erste Innengehäuse kann in diesem Ausführungsbeispiel geometrisch unterschiedlich zu dem ersten Innengehäuse der vorangegangenen Ausführungsbeispiele ausgebildet sein. Insbesondere mag das erste Innengehäuse aus einer Wand bestehen, welche das erste Ventilelement aufweist.

Die Druckausgleichsverbindung stellt eine Fluidverbindung zwischen dem dritten Volumen und dem zweiten Volumen bereit, so dass das Fluid durch die Druckausgleichsverbindung strömen kann. Folglich ist ein Druckausgleich zwischen dem zweiten Druck in dem zweiten Volumen und dem dritten Druck in dem dritten Volumen ermöglicht.

In einem nicht erfindungsgemäßen Beispiel weist die Druckausgleichsverbindung ein Sperrventil auf.

Ist das Sperrventil geschlossen, können insbesondere etwaige Leckageströme über das erste Ausgleichsventil abgedichtet und somit unterbunden werden.

In einem nicht erfindungsgemäßen Beispiel kann, wenn die Druckausgleichsverbindung ein Sperrventil aufweist, die erste Dichtung, insbesondere der erste Kolbenring, in dem ersten Ausgleichselement entfallen. Somit kann das Ventil mechanisch einfacher ausgebildet sein.

Das Sperrventil dient zum kontrollieren Öffnen und Schließen der Druckausgleichsverbindung.

In einer beispielhaften Ausführungsform der vorliegenden Erfindung weist der Ventilschaft an einer Stelle zwischen dem ersten Innengehäuse und dem zweiten Innengehäuse einen Aktuator, insbesondere mit einer internen Rückstellfeder, auf.

Der Aktuator weist eine Rückstellfeder zum Rückstellen des ersten Ventiltellers in den Ventilsitz (Ventil geschlossen) auf. Die Rückstellfeder ermöglicht ein Schließen des ersten Ventiltellers, da zwischen dem Ventilschaft und dem weiteren Ventilschaft keine Verbindung besteht, welche Zugkräfte (in Ventilschließrichtung) überträgt.

Weist der Aktuator die interne Rückstellfeder auf, kann diese insbesondere das erste Ventilelement schließen, wenn der Antrieb das zweite Ventilelement geschlossen hat.

In einer beispielhaften Ausführungsform der vorliegenden Erfindung ist der Turbineneinlass mit dem Einlass des Ventils koppelbar und der Strömungskanal ist mit dem ersten Auslass und/oder dem zweiten Auslass koppelbar.

Es wird darauf hingewiesen, dass die hier beschriebenen Ausführungsformen lediglich eine beschränkte Auswahl an möglichen Ausführungsvarianten der Erfindung darstellen. So ist es möglich, die Merkmale einzelner Ausführungsformen in geeigneter Weise miteinander zu kombinieren, so dass für den Fachmann mit den hier expliziten Ausführungsvarianten eine Vielzahl von verschiedenen Ausführungsformen als offensichtlich offenbart anzusehen sind.

### Kurze Beschreibung der Zeichnung

Im Folgenden wird zur weiteren Erläuterung und zum besseren Verständnis der vorliegenden Erfindung ein Ausführungsbeispiel unter Bezugnahme auf die beigefügten Figuren näher beschrieben.
Fig. 1 zeigt ein erstes Beispiel für ein Ventil nach dem Stand der Technik im Querschnitt.
Fig. 2 zeigt ein zweites Beispiel für ein Ventil nach dem Stand der Technik im Querschnitt.
Fig. 3 zeigt das erfindungsgemäße Ventil gemäß einer beispielhaften Ausführungsform im Querschnitt.

### Detaillierte Beschreibung von exemplarischen Ausführungsformen

Gleiche oder ähnliche Komponenten sind in den Figuren mit gleichen Bezugsziffern versehen. Die Darstellung in den Figuren ist schematisch und nicht maßstäblich.

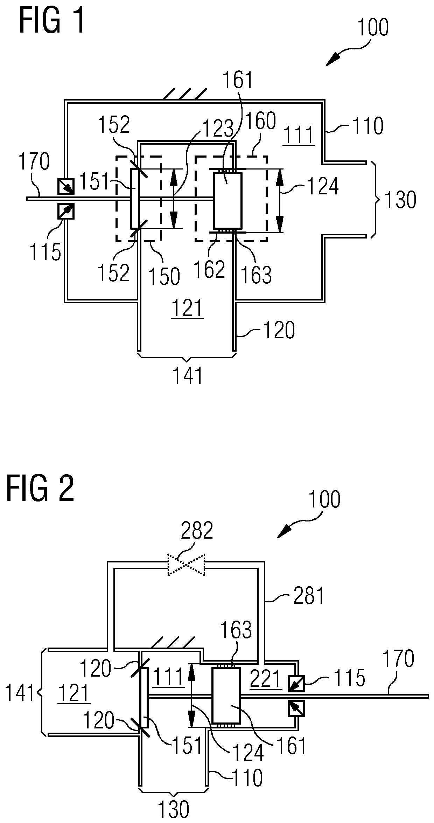

**Fig. 1** zeigt ein Ventil 100 gemäß dem Stand der Technik im Querschnitt.

Das Ventil 100 weist eine Gehäuseanordnung 110, 120 mit einem Einlass 130 und einem ersten Auslass 141 auf, wobei die Gehäuseanordnung 110, 120 ein Außengehäuse 110 und ein erstes Innengehäuse 120 aufweist. Ferner weist das Ventil 100 ein erstes Ventilelement 150 und ein erstes Ausgleichselement 160 auf. Das erste Ventilelement 150 ist in einer ersten Öffnung 123 des ersten Innengehäuses 120 angeordnet. Das erste Ausgleichselement 160 ist in einer zweiten Öffnung 124 in dem ersten Innengehäuse 120 angeordnet. Das erste Ventilelement 150 weist einen ersten Ventilteller 151 und einen ersten Ventilsitz 152 auf. Der erste Ventilsitz 152 ist in der ersten Öffnung 123 fluiddicht angeordnet. Das erste Ausgleichselement 160 weist einen ersten Ausgleichskolben 161, eine erste Buchse 162 und drei erste Kolbenringe 163 bzw. drei erste Dichtungen 163 auf. Der erste Ausgleichskolben 161 ist gleitend in und mittels der drei ersten Dichtungen 163 fluiddicht gegen die erste Buchse 162 in der zweiten Öffnung 124 in dem ersten Innengehäuse 120 angeordnet.

In Fig. 1 sind drei Dichtungen 163 bzw. Kolbenringe 163 dargestellt, jedoch mag schon eine Dichtung 163 bzw. ein Kolbenring 163 ausreichend zur Abdichtung des ersten Ausgleichskolbens 161 sein.

Der erste Ventilteller 151 und der erste Ausgleichskolben 161 sind auf demselben Ventilschaft 170 starr sowie mit gleichbleibendem Abstand zueinander angeordnet. Der Ventilschaft 170 ist zusätzlich mittels des Ventilschaftlagers 115 in dem Außengehäuse 110 gelagert.

Ein Fluid strömt von dem Einlass 130 durch das erste Volumen 111 bis zu dem ersten Ventilteller 151, welcher in Fig. 1 in der geschlossenen Stellung dargestellt ist. Wenn der erste Ventilteller 151 geöffnet ist, strömt das Fluid durch eine entstehende Strömungsöffnung zwischen dem ersten Ventilteller 151 und dem ersten Ventilsitz 152 in das zweite Volumen 121. Nach Durchqueren des zweiten Volumens 121 strömt das Fluid aus dem ersten Auslass 141 in einen Strömungskanal einer Dampfturbine (nicht dargestellt). Zum Öffnen wird der erste Ventilteller 151 in Fig. 1 nach links und somit aus dem ersten Ventilsitz 152 heraus verschoben.

Der erste Ausgleichskolben 161 kann in der ersten Buchse 162 gleiten. Dabei wird der erste Ausgleichskolben 161 gegen die erste Buchse 162 durch drei erste Dichtungen 163 abgedichtet.

Der erste Ventilteller 151 und der erste Ausgleichskolben 161 können nicht unabhängig voneinander entlang des Ventilschafts 170 bewegt werden. Somit sind der erste Ventilteller 151 und der erste Ausgleichskolben 161 starr miteinander mittels des Ventilschafts 170 verbunden. Insbesondere wird der erste Ausgleichskolben 161 bei einem Verschieben nach links (Öffnen) des ersten Ventiltellers 151 ebenfalls um dieselbe Distanz in dem ersten Ausgleichskolben 161 nach links verschoben, wobei jedoch kein Fluid zwischen dem ersten Volumen 111 und dem zweiten Volumen 121 über den ersten Ausgleichskolben 161 strömt. Es strömt somit aufgrund der drei ersten Dichtungen 163 kein Fluid zwischen dem ersten Ausgleichskolben 161 und der ersten Buchse 162.

**Fig. 2** zeigt ein Ventil 100 gemäß dem Stand der Technik Querschnitt.

Gemäß diesem Beispiel weist das Außengehäuse 110 die zweite Öffnung 124 auf. Das erste Ausgleichselement 160 trennt das erste Volumen 111 von einem dritten Volumen 221, welches zwischen dem Außengehäuse 110 und dem ersten Ausgleichselement 160 definiert ist. Ferner weist das in Fig. 2 gezeigte Ventil 100 eine Druckausgleichsverbindung 281 auf, welche das dritte Volumen 221 und das zweite Volumen 121 miteinander verbindet. Das dritte Volumen 221 ist weder mit dem Einlass 130 noch mit dem zweiten Auslass 141 verbunden. Somit ermöglicht die Druckausgleichsverbindung 281 einen Druckausgleich zwischen dem zweiten Volumen 121 am ersten Auslass 141 und dem dritten Volumen 221. Darüber hinaus ist ein Sperrventil 282 in der Druckausgleichsverbindung 281 vorgesehen, mit dessen Hilfe ein Fluidfluss durch die Druckausgleichsverbindung 281 entweder ermöglicht oder unterbunden werden kann.

Der erste Ventilteller 151 ist in dem ersten Innengehäuse 120 angeordnet, welches unterschiedlich zu dem ersten Innengehäuse 120 in Fig. 1 ausgebildet ist. Das erste Innengehäuse 120 in Fig. 2 kann insbesondere geometrisch einfacher ausgebildet sein, da der erste Ausgleichskolben 161 in dem Außengehäuse 110 gelagert ist und somit lediglich eine erste Öffnung 123 mittels des ersten Innengehäuses 120 ausgebildet werden muss. Somit besteht das erste Innengehäuse 120 gemäß des in Fig. 2 gezeigten Ausführungsbeispiels aus einer geraden Wand, welche die erste Öffnung 123 mit dem darin angeordneten ersten Ventilteller 151 aufweist.

Der Ventilschaft 170 verbindet den ersten Ventilteller 151 starr mit dem ersten Ausgleichskolben 161 und ist darüber hinaus über das Ventilschaftlager 115 in dem Außengehäuse 110 gelagert.

Das Ventil 100 ist in Fig. 2 in der geschlossenen Stellung dargestellt. Der erste Druck in dem ersten Volumen 111 ist direkt nach dem Schließen bzw. direkt vor dem Öffnen des ersten Ventiltellers 151 größer als der zweite Druck in dem zweiten Volumen 121.

Der erste Ventilteller 151 und der erste Ausgleichskolben 161 weisen denselben Durchmesser auf. Somit ist eine erste Kraft, welche durch den ersten Druck des Fluides in dem ersten Volumen 111 an dem ersten Ventilteller 151 wirkt, und eine zweite Kraft, welche durch den ersten Druck des Fluides in dem ersten Volumen 111 an dem ersten Ausgleichskolben 161 wirkt, gleich groß. Folglich gleichen sich die erste Kraft und die zweite Kraft aus. Somit sind lediglich verringerte Stellkräfte zum Verstellen des ersten Ventiltellers 151 notwendig.

Für den Fachmann ist es ersichtlich, dass der erste Ausgleichskolben 161 und der erste Ventilteller 151 auch unterschiedliche Durchmesser aufweisen können. Dann unterscheiden sich die erste Kraft und die zweite Kraft. Bei einem lediglich geringen Unterschied der ersten Kraft und der zweiten Kraft ist die vom Antrieb aufzubringende Kraft ebenfalls lediglich gering.

Ist das Sperrventil 282 verschlossen, können Leckagen über den ersten Ausgleichskolben 161 verringert werden.

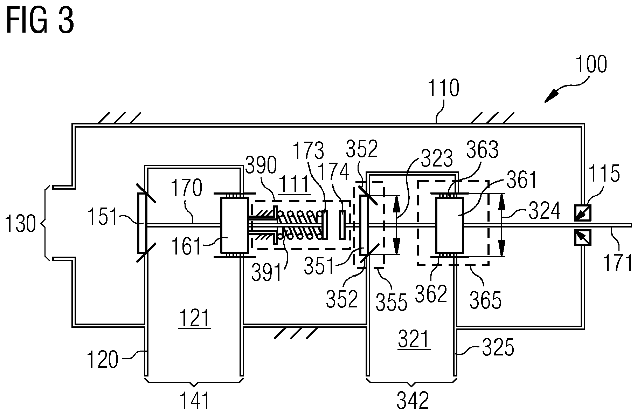

**Fig. 3** zeigt das erfindungsgemäße Ventil 100 gemäß eines beispielhaften Ausführungsform der Erfindung im Querschnitt.

Die Gehäuseanordnung 110, 120 weist gemäß der beispielhaften Ausführungsform ferner ein zweites Innengehäuse 325 auf, welches beabstandet zu dem ersten Innengehäuse 120 in dem Außengehäuse 110 angeordnet ist. Darüber hinaus ist das zweite Innengehäuse 325 derart angeordnet, dass das zweite Innengehäuse 325 das erste Volumen 111 und ein viertes Volumen 321 an einem zweiten Auslass 342 voneinander abtrennt. Ferner weist das Ventil 100 ein zweites Ventilelement 355 und ein zweites Ausgleichselement 365 auf. Das zweite Ventilelement 355 weist, wie auch das erste Ventilelement 150 (in Fig. 1 im Detail dargestellt) einen zweiten Ventilteller 351 und einen zweiten Ventilsitz 352 auf. Das zweite Ausgleichselement 365 weist wie auch das erste Ausgleichselement 160 (in Fig. 1 im Detail dargestellt) einen zweiten Ausgleichskolben 361, eine zweite Buchse 362 und drei zweite Kolbenringe 363 bzw. drei zweite Dichtungen 363 auf.

Das zweite Innengehäuse 325 weist eine dritte Öffnung 323 und eine vierte Öffnung 324 auf.

Der zweite Ventilsitz 352 ist in der dritten Öffnung 323 auswechselbar angeordnet. In der geschlossenen Stellung dichtet der zweite Ventilteller 351 gegen den zweiten Ventilsitz 352 ab, so dass ein Fluidfluss durch die dritte Öffnung 323 unterbunden ist.

Der zweite Ausgleichskolben 361 gleitet in der zweiten Buchse 362, welche in der vierten Öffnung 324 unbeweglich aber auswechselbar angeordnet ist.

Der erste Ventilteller 151 und der erste Ausgleichskolben 161, sind starr und zueinander unbeweglich verbunden auf dem Ventilschaft 170 angeordnet, der zweite Ventilteller 351 und der zweite Ausgleichskolben 361 sind starr und zueinander unbeweglich auf dem weiteren Ventilschaft 171 angeordnet. Der weitere Ventilschaft 171 und der Ventilschaft 170 sind üblicherweise in einem Abstand x zueinander angeordnete, so dass zunächst beim Bewegen (Öffnen) des zweiten Ventiltellers 351 auf dem weiteren Ventilschaft 171 der erste Ventilteller 151 bzw. der Ventilschaft 170 sich nicht bewegen. Erst nach dem der Abstand x überwunden wird, wird auch der Ventilschaft 170 mit dem ersten Ventilteller 151 bewegt (geöffnet). Der Ventilschaft 170 hat an seinem dem weiteren Ventilschaft 171 zugewandten Ende eine Kontaktfläche 173 bzw. Wirkfläche 173 und der weitere Ventilschaft 171 hat an seinem dem Ventilschaft 170 zugewandten Ende eine entsprechende weitere Kontaktfläche 174 bzw. weitere Wirkfläche 174. Ferner ist ein Aktuator 390 an dem Ventilschaft 170 angeordnet. Der Aktuator 390 weist eine Rückstellfeder 391 zum Rückstellen des ersten Ventiltellers 151 in den Ventilsitz (Ventil geschlossen) auf. Die Rückstellfeder 391 ermöglicht ein Schließen des ersten Ventiltellers 151, da zwischen dem Ventilschaft 170 und dem weiteren Ventilschaft 171 keine Verbindung besteht die Zugkräfte(in Ventilschließrichtung) überträgt.

Folglich können der erste Ventilteller 151 und der zweite Ventilteller 351 synchron (X=0) und auch nacheinander (X≠0) geschlossen und geöffnet werden.

Das zweite Volumen 121 an dem ersten Auslass 141 ist nicht direkt strömungstechnisch mit dem vierten Volumen 321 an dem zweiten Auslass 342 verbunden.

In dem in Fig. 3 gezeigten Ausführungsbeispiel weisen der erste Ventilteller 151, der erste Ausgleichskolben 161, der zweite Ventilteller 351 und der zweite Ausgleichskolben 361 denselben Radius und somit dieselbe Fläche auf. Somit hebt sich eine durch den ersten Druck im ersten Volumen 111 an dem ersten Ventilteller 151 wirkende erste Kraft und eine durch den ersten Druck im ersten Volumen 111 an dem ersten Ausgleichskolben 161 wirkende zweite Kraft auf. Ferner hebt sich eine durch den ersten Druck im ersten Volumen 111 an dem zweiten Ventilteller 351 wirkende erste Kraft und eine durch den ersten Druck im ersten Volumen 111 an dem zweiten Ausgleichskolben 361 wirkende zweite Kraft auf. Gleichzeitig dichten der erste Ausgleichskolben 161 und der zweite Ausgleichskolben 361 trotz einer jeweiligen Ausgleichsbewegung in der ersten Buchse 162 bzw. der zweiten Buchse 362 Leckagen über den ersten Ausgleichskolben 161 bzw. den zweiten Ausgleichskolben 361 zuverlässig ab.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden ist, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

**Bezugszeichenliste:**

| | | | |
|---|---|---|---|
| 100 | Ventil | 173 | Kontaktfläche |
| 110 | Außengehäuse | 174 | weitere Kontaktfläche |
| 111 | erstes Volumen | 221 | drittes Volumen |
| 115 | Ventilschaftlager | 281 | Druckausgleichsverbindung |
| 120 | Innengehäuse | 282 | Sperrventil |
| 121 | zweites Volumen | 321 | viertes Volumen |
| 123 | erste Öffnung | 323 | dritte Öffnung |
| 124 | zweite Öffnung | 324 | vierte Öffnung |
| | | 325 | zweites Innengehäuse |
| 130 | Einlass | 342 | zweiter Auslass |
| 141 | erster Auslass | 351 | zweiter Ventilteller |
| 150 | erstes Ventilelement | 352 | zweiter Ventilsitz |
| 151 | Ventilteller | 355 | zweites Ventilelement |
| 152 | Ventilsitz | 361 | zweiter Ausgleichskolben |
| 160 | erstes Ausgleichsele-ment | 362 | zweite Buchse |
| 161 | erster Ausgleichskolben | 363 | zweite Dichtung/zweiter Kolbenring |
| 162 | erste Buchse | 365 | zweites Ausgleichselement |
| 163 | erste Dichtung/erster Kolbenring | 390 | Aktuator |
| 170 | Ventilschaft | 391 | Rückstellfeder |
| 171 | weiterer Ventilschaft | | |

## Patentansprüche

1. Ventil (100) für eine Dampfturbine, aufweisend
eine Gehäuseanordnung (110, 120) mit einem Einlass (130) und einem ersten Auslass (141),
ein erstes Ventilelement (150), und
ein erstes Ausgleichselement (160),
wobei das erste Ventilelement (150) derart in der Gehäuseanordnung (110, 120) zwischen dem Einlass (130) und dem ersten Auslass (141) angeordnet ist, dass durch das erste Ventilelement (150) ein Fluidfluss zwischen dem Einlass (130) und dem ersten Auslass (141) steuerbar ist,
wobei ein erstes Volumen (111) zwischen dem Einlass (130) und dem ersten Ventilelement (150) definiert ist,
wobei das erste Ventilelement (150) das erste Volumen (111) von einem zweiten Volumen (121) an dem ersten Auslass (141) trennt,
wobei das erste Ausgleichselement (160) derart in der Gehäuseanordnung (110, 120) angeordnet ist, dass mittels zumindest einer Dichtung (163) zwischen der Gehäuseanordnung und dem ersten Ausgleichselement (160) das erste Volumen (111) gegen das zweite Volumen (121) abgedichtet ist,
wobei das erste Ausgleichselement (160) und das erste Ventilelement (150) über einen Ventilschaft (170) starr miteinander verbunden sind,
wobei das erste Ausgleichselement (160) und das erste Ventilelement (150) derart beweglich angeordnet sind, dass bei einem Verfahren des ersten Ventilelements (150) und des ersten Ausgleichselements (160) das erste Volumen (111) und das zweite Volumen (121) über das erste Ausgleichselement (160) hinweg gegeneinander abgedichtet bleiben,
wobei die Gehäuseanordnung (110, 120) ein erstes Innengehäuse (120) und ein Außengehäuse (110) aufweist,
wobei das erste Innengehäuse (120) derart in der Gehäuseanordnung (110, 120) anordenbar ist, dass das erste Innengehäuse (110) das erste Volumen (111) und das zweite Volumen (121) voneinander trennt,
wobei das erste Innengehäuse (120) eine erste Öffnung (123) aufweist,
wobei das erste Ventilelement (150) in der ersten Öffnung (123) anordenbar ist,
wobei die Gehäuseanordnung (110, 120) eine zweite Öffnung (124) aufweist, in welcher das erste Ausgleichselement (160) angeordnet ist,
wobei das erste Innengehäuse (120) ferner die zweite Öffnung (124) aufweist, **dadurch gekennzeichnet, dass** die Gehäuseanordnung (110, 120) ferner ein zweites Innengehäuse (325) aufweist,
wobei das zweite Innengehäuse (325) derart in der Gehäuseanordnung (110, 120) anordenbar ist, dass das zweite Innengehäuse (325) das erste Volumen (111) und ein viertes Volumen (321) an einem zweiten Auslass (342) trennt,
wobei das Ventil (100) ferner aufweist
ein zweites Ventilelement (355), und
ein zweites Ausgleichselement (365),
wobei das zweite Innengehäuse (325) eine dritte Öffnung (323) und eine vierte Öffnung (324) aufweist,
wobei das zweite Ventilelement (355) in der dritten Öffnung (323) anordenbar ist,
wobei das zweite Ausgleichselement (365) in der vierten Öffnung (324) anordenbar ist,
wobei das zweite Ausgleichselement (365) und das zweite Ventilelement (355) über einen weiteren Ventilschaft (171) starr miteinander verbunden sind, und
wobei der Ventilschaft (170) und der weitere Ventilschaft (171) gegeneinander beweglich gekoppelt sind.

2. Ventil (100) gemäß Anspruch 1,
wobei das zweite Volumen (121) zwischen dem ersten Ventilelement (150) und dem ersten Ausgleichselement (160) angeordnet ist.

3. Ventil gemäß Anspruch 1 oder 2,
wobei das erste Ventilelement (150) und das erste Ausgleichselement (160) in der Gehäuseanordnung (110, 120) gegenüberliegend angeordnet sind.

4. Ventil gemäß einem beliebigen der Ansprüche 1 bis 3,
wobei eine erste Kraft durch einen ersten Druck eines Fluides in dem ersten Volumen (111) auf eine erste Oberfläche des ersten Ventilelements (150) wirkt,
wobei eine zweite Kraft durch den ersten Druck in dem ersten Volumen (111) auf eine erste Oberfläche des ersten Ausgleichselements (160) wirkt,
wobei die erste Oberfläche des ersten Ventilelements (150) und die erste Oberfläche des ersten Ausgleichselements (160) gleich groß sind, und
wobei sich die erste Kraft und die zweite Kraft ausgleichen.

5. Ventil (100) gemäß einem beliebigen der Ansprüche 1 bis 4,
wobei das erste Ausgleichselement (160) einen ersten Ausgleichskolben (161) und eine erste Buchse (162) aufweist, wobei der erste Ausgleichskolben (161) in der ersten Buchse (162) gleitend und mittels der zumindest einen Dichtung (163) gegen die erste Buchse (162) abgedichtet angeordnet ist, und wobei die erste Buchse (162) in der zweiten Öffnung (124) fluiddicht angeordnet ist.

6. Ventil (100) gemäß Anspruch 5,
wobei eine Länge der ersten Buchse (162) und eine Länge des ersten Ausgleichskolbens (161) derart aufeinander abgestimmt sind, dass bei einem maximalen Verfahren des ersten Ventilelements (150) und des ersten Ausgleichskolbens (160) der erste Ausgleichskolben (161) zu jedem Zeitpunkt in der ersten Buchse (162) gleitet.

7. Ventil (100) nach einem der vorherigen Ansprüche,
wobei der Ventilschaft (170) an einer Stelle zwischen dem ersten Innengehäuse (120) und dem zweiten Innengehäuse (325) einen Aktuator (390), insbesondere mit einer Rückstellfeder (391), aufweist.

8. Turbine aufweisend
einen Strömungskanal,
einen Turbineneinlass, und
ein Ventil (100) gemäß einem beliebigen der Ansprüche 1 bis 7.

9. Turbine gemäß Anspruch 8, wobei der Turbineneinlass mit dem Einlass (130) des Ventils (100) koppelbar ist, und
wobei der Strömungskanal mit dem ersten Auslass (141) und/oder dem zweiten Auslass (342) koppelbar ist.

## Claims

1. Valve (100) for a steam turbine, having
a housing arrangement (110, 120) with an inlet (130) and with a first outlet (141),
a first valve element (150), and
a first compensation element (160),
wherein the first valve element (150) is arranged in the housing arrangement (110, 120) between the inlet (130) and the first outlet (141) in such a way that a fluid flow between the inlet (130) and the first outlet (141) is able to be controlled by the first valve element (150),
wherein a first volume (111) is defined between the inlet (130) and the first valve element (150),
wherein the first valve element (150) separates the first volume (111) from a second volume (121) at the first outlet (141),
wherein the first compensation element (160) is arranged in the housing arrangement (110, 120) in such a way that the first volume (111) is sealed off with respect to the second volume (121) by means of at least one seal (163) between the housing arrangement and the first compensation element (160),
wherein the first compensation element (160) and the first valve element (150) are connected rigidly to one another via a valve shank (170),
wherein the first compensation element (160) and the first valve element (150) are movably arranged in such a way that, during a movement of the first element (150) and the first compensation element (160), the first volume (111) and the second volume (121) remain sealed off with respect to one another over the first compensation element (160),
wherein the housing arrangement (110, 120) has a first inner housing (120) and an outer housing (110),
wherein the first inner housing (120) is able to be arranged in the housing arrangement (110, 120) in such a way that the first inner housing (110) separates the first volume (111) and the second volume (121) from one another,
wherein the first inner housing (120) has a first opening (123),
wherein the first valve element (150) is able to be arranged in the first opening (123),
wherein the housing arrangement (110, 120) has a second opening (124), in which the first compensation element (160) is arranged,
wherein the first inner housing (120) also has the second opening (124),
**characterized in that**
the housing arrangement (110, 120) also has a second inner housing (325),
wherein the second inner housing (325) is able to be arranged in the housing arrangement (110, 120) in such a way that the second inner housing (325) separates the first volume (111) and a fourth volume (321) at a second outlet (342),
wherein the valve (100) also has
a second valve element (355), and
a second compensation element (365),
wherein the second inner housing (325) has a third opening (323) and a fourth opening (324),
wherein the second valve element (355) is able to be arranged in the third opening (323),
wherein the second compensation element (365) is able to be arranged in the fourth opening (324),
wherein the second compensation element (365) and the second valve element (355) are connected rigidly to one another via a further valve shank (171), and
wherein the valve shank (170) and the further valve shank (171) are coupled so as to be movable relative to one another.

2. Valve (100) according to Claim 1,
wherein the second volume (121) is arranged between the first valve element (150) and the first compensation element (160).

3. Valve according to Claim 1 or 2,
wherein the first valve element (150) and the first compensation element (160) are arranged in the housing arrangement (110, 120) opposite one another.

4. Valve according to any one of Claims 1 to 3,
wherein a first force, due to a first pressure of a fluid in the first volume (111), acts on a first surface of the first valve element (150),
wherein a second force, due to the first pressure in the first volume (111), acts on a first surface of the first compensation element (160),
wherein the first surface of the first valve element (150) and the first surface of the first compensation element (160) are equal in size, and
wherein the first force and the second force cancel one another out.

5. Valve (100) according to any one of Claims 1 to 4,
wherein the first compensation element (160) has a first compensation piston (161) and a first bushing (162),
wherein the first compensation piston (161) is arranged in the first bushing (162) in a sliding manner and so as to be sealed off with respect to the first bushing (162) by means of the at least one seal (163), and
wherein the first bushing (162) is arranged in a fluid-tight manner in the second opening (124).

6. Valve (100) according to Claim 5,
wherein a length of the first bushing (162) and a length of the first compensation piston (161) are matched to one another in such a way that, in the case of a maximum movement of the first valve element (150) and the first compensation piston (161), the first compensation piston (161) slides in the first bushing (162) at all times.

7. Valve (100) according to one of the preceding claims,
wherein the valve shank (170) has, at a position between the first inner housing (120) and the second inner housing (325), an actuator (390), in particular having a restoring spring (391) .

8. Turbine comprising
a flow channel,
a turbine inlet, and
a valve (100) according to any one of Claims 1 to 7.

9. Turbine according to Claim 8,
wherein the turbine inlet is able to be coupled to the inlet (130) of the valve (100), and
wherein the flow channel is able to be coupled to the first outlet (141) and/or the second outlet (342).

## Revendications

1. Soupape (100) pour une turbine à vapeur, présentant
un agencement de boîtier (110, 120) ayant une entrée (130) et une première sortie (141),
un premier élément de soupape (150), et
un premier élément de compensation (160),
dans laquelle le premier élément de soupape (150) est agencé dans l'agencement de boîtier (110, 120) entre l'entrée (130) et la première sortie (141) de sorte qu'un écoulement de fluide entre l'entrée (130) et la première sortie (141) peut être commandé par le premier élément de soupape (150),
dans laquelle un premier volume (111) est défini entre l'entrée (130) et le premier élément de soupape (150),
dans laquelle le premier élément de soupape (150) sépare le premier volume (111) d'un deuxième volume (121) au niveau de la première sortie (141),
dans laquelle le premier élément de compensation (160) est agencé dans l'agencement de boîtier (110, 120) de sorte que le premier volume (111) est scellé contre le deuxième volume (121) au moyen d'au moins un joint (163) entre l'agencement de boîtier et le premier élément de compensation (160),
dans laquelle le premier élément de compensation (160) et le premier élément de soupape (150) sont rigidement reliés l'un à l'autre par une tige de soupape (170),
dans laquelle le premier élément de compensation (160) et le premier élément de soupape (150) sont agencés de manière mobile de sorte que, lorsque le premier élément de soupape (150) et le premier élément de compensation (160) sont déplacés, le premier volume (111) et le deuxième volume (121) restent étanches l'un contre l'autre contre le premier élément de compensation (160),
dans laquelle l'agencement de boîtier (110, 120) présente un premier boîtier intérieur (120) et un boîtier extérieur (110),
dans laquelle le premier boîtier intérieur (120) peut être agencé dans l'agencement de boîtier (110, 120) de sorte que le premier boîtier intérieur (110) sépare le premier volume (111) et le deuxième volume (121) l'un de l'autre,
dans laquelle le premier boîtier intérieur (120) présente une première ouverture (123),
dans laquelle le premier élément de soupape (150) peut être agencé dans la première ouverture (123),
dans laquelle l'agencement de boîtier (110, 120) présente une deuxième ouverture (124) dans laquelle le premier élément de compensation (160) est agencé,
dans laquelle le premier boîtier intérieur (120) présente en outre la deuxième ouverture (124),
**caractérisée en ce que**
l'agencement de boîtier (110, 120) présente en outre un second boîtier intérieur (325),
dans laquelle le second boîtier intérieur (325) peut être agencé dans l'agencement de boîtier (110, 120) de sorte que le second boîtier intérieur (325) sépare le premier volume (111) et un quatrième volume (321) l'un de l'autre au niveau d'une seconde sortie (342),
dans laquelle la soupape (100) présente en outre un second élément de soupape (355) et
un second élément de compensation (365),
dans laquelle le second boîtier intérieur (325) présente une troisième ouverture (323) et une quatrième ouverture (324),
dans laquelle le second élément de soupape (355) peut être agencé dans la troisième ouverture (323),
dans laquelle le second élément de compensation (365) peut être agencé dans la quatrième ouverture (324),
dans laquelle le second élément de compensation (365) et le second élément de soupape (355) sont rigidement reliés l'un à l'autre par une autre tige de soupape (171),
dans laquelle la tige de soupape (170) et l'autre tige de soupape (171) sont couplées de manière mobile l'une à l'autre.

2. Soupape (100) selon la revendication 1,
dans laquelle le deuxième volume (121) est agencé entre le premier élément de soupape (150) et le premier élément de compensation (160).

3. Soupape selon la revendication 1 ou 2,
dans laquelle le premier élément de soupape (150) et le premier élément de compensation (160) sont agencés l'un en face de l'autre dans l'agencement de boîtier (110, 120).

4. Soupape selon l'une quelconque des revendications 1 à 3, dans laquelle une première force agit sur une première surface du premier élément de soupape (150) par une première pression d'un fluide dans le premier volume (111),
dans laquelle une seconde force agit sur une première surface du premier élément de compensation (160) à travers la première pression dans le premier volume (111),
dans laquelle la première surface du premier élément de soupape (150) et la première surface du premier élément de compensation (160) sont de taille égale, et
dans laquelle la première force et la seconde force s'équilibrent.

5. Soupape (100) selon l'une quelconque des revendications 1 à 4,
dans laquelle le premier élément de compensation (160) présente un premier piston de compensation (161) et une première douille (162), dans laquelle le premier piston de compensation (161) est agencé de manière coulissante dans la première douille (162) et de manière étanche contre la première douille (162) au moyen de l'au moins un joint (163), et dans laquelle la première douille (162) est agencée de manière étanche aux fluides dans la deuxième ouverture (124).

6. Soupape (100) selon la revendication 5,
dans laquelle une longueur de la première douille (162) et une longueur du premier piston de compensation (161) sont adaptées l'une à l'autre de sorte que le premier piston de compensation (161) coulisse à tout moment dans la première douille (162) lors d'un déplacement maximal du premier élément de soupape (150) et du premier piston de compensation (160).

7. Soupape (100) selon l'une des revendications précédentes,
dans laquelle la tige de soupape (170) présente un actionneur (390), en particulier avec un ressort de rappel (391), en un point entre le premier boîtier intérieur (120) et le second boîtier intérieur (325).

8. Turbine présentant un conduit d'écoulement, une entrée de turbine et une soupape (100) selon l'une quelconque des revendications 1 à 7.

9. Turbine selon la revendication 8,
dans laquelle l'entrée de turbine peut être couplée à l'entrée (130) de la soupape (100), et
dans laquelle le canal d'écoulement peut être couplé à la première sortie (141) et/ou à la seconde sortie (342).
